# EUROPEAN PATENT SPECIFICATION

(11) **EP 3 843 908 B1**
(45) Date of publication and mention of the grant of the patent: **21.08.2024**
(21) Application number: 19779999.2
(22) Date of filing: 21.08.2019
(51) Int. Cl.: B05D 5/00, G05B 19/408, G05B 19/418

(54) **LEARNING FRAMEWORK FOR ROBOTIC PAINT REPAIR**
LERNRAHMEN FÜR EINE ROBOTISCHE LACKREPARATUR
CADRE D'APPRENTISSAGE POUR RÉPARATION ROBOTIQUE DE PEINTURE

(30) Priority: 27.08.2018 US 201862723127 P
(43) Date of publication of application: 07.07.2021
(60) Divisional application: 24187711.7
(73) Proprietor: 3M Innovative Properties Company, Saint Paul, Minnesota 55133-3427 (US)
(72) Inventor: HEMES, Brett R., Saint Paul, Minnesota 55133-3427 (US); HENDERSON, John W., Saint Paul, Minnesota 55133-3427 (US); HERBST, Nathan J., Saint Paul, Minnesota 55133-3427 (US); FLOEDER, Steven P., Saint Paul, Minnesota 55133-3427 (US); ADOLF, Jeffrey P., Saint Paul, Minnesota 55133-3427 (US)
(74) Representative: Vossius & Partner Patentanwälte Rechtsanwälte mbB
(86) International application number: PCT/IB2019/057053
(87) International publication number: WO 2020/044178

(56) References cited:
- US-A- 5 477 268
- US-A1- 2003 139 836
- COLLIN WANG ET AL: "Virtual-Reality-Based Point-and-Direct Robotic Inspection in Manufacturing", IEEE TRANSACTIONS ON ROBOTICS AND AUTOMATION, IEEE INC, NEW YORK, US, vol. 12, no. 4, 1 August 1996 (1996-08-01), XP011053138, ISSN: 1042-296X

## Description

### TECHNICAL FIELD

This application is directed to a framework for learning and executing automated defect-specific repairs for paint applications (*e.g.,* primer sanding, clear coat defect removal, clear coat polishing, *etc.*)*.* The disclosed techniques automate the generation and utilization of domain-specific process know-how using state-of-the-art machine learning methods for inspection, classification, and policy optimization.

### BACKGROUND

Clear coat repair is one of the last operations to be automated in the automotive original equipment manufacturing (OEM) sector. Techniques are desired for automating this process as well as other paint applications (*e.g.,* primer sanding, clear coat defect removal, clear coat polishing, *etc.*) amenable to the use of abrasives and/or robotic inspection and repair. Additionally, this problem has not been solved in the aftermarket sector.

Prior efforts to automate the detection and repair of paint defects include the system described in US Patent Publication No. 2003/0139836, which discloses the use of electronic imaging to detect and repair paint defects on a vehicle body. The system references the vehicle imaging data against vehicle CAD data to develop three-dimensional paint defect coordinates for each paint defect. The paint defect data and paint defect coordinates are used to develop a repair strategy for automated repair using a plurality of automated robots that perform a variety of tasks including sanding and polishing the paint defect. The repair strategy includes path and processing parameters, tools, and robot choice. Force feedback sensors may be used to control the repair process. Additional tasks may include generating robot paths and tooling parameters, performing quality data logging, and error reporting. However, no details of the repair process are provided. Also, the system applies no pattern matching or machine learning techniques to assist in the identification of the defects or in determining the optimal process for correcting the defect.

US Patent Publication No. 2017/0277979 discloses the use of a pattern classifier in a vehicle inspection system to identify defects from images generated by shining light on a specular surface at a fixed position and measuring the reflected light using a fixed camera. The pattern classifier is trained to improve defect detection results by using the images to build an image training set for a vehicle model and color. The images in the training set are examined by a human or machine to identify which images and which pixels have defects. However, no automated techniques are disclosed for correcting the identified defects.

US Patent 9,811,057 discloses the use of machine learning to predict the life of a motor by observing a state variable comprising output data of a sensor that detects the operation state of the motor and data related to presence or absence of a failure in the motor. A learning unit learns the condition associated with the predicted life of the motor in accordance with a training data set created based on a combination of the state variable and the measured actual life of the motor.

US5477268 A 19951219 discloses an apparatus to detect defects and finish a surface of a workpiece moving at a predetermined speed along an automatic finishing line.

US2003139836 A1 20030724 discloses a method of detecting and repairing paint defects on a vehicle body.

The article "Virtual-Reality-Based Point-and-Direct Robotic Inspection in Manufacturing" by Collin Wang; David J Cannon (ISSN 1042-296X) discloses a flexible manufacturing paradigm in which robot grasping is interactively specified and skeletal images are efficiently used in combination to allow rapidly setting up surface flaw identification tasks in small-quantity/large-variety manufacturing.

Applicant can find no application of machine learning techniques to identify and to repair paint defects in an automated manner. Also, the prior art systems do not account for variations in the automated processes used by customers to inspect and to correct paint defects. Improved techniques for automating such processes are desired.

### SUMMARY

The invention is defined by the appended claims. Various examples are now described to introduce a selection of concepts in a simplified form that are further described below in the Detailed Description. The Summary is not intended to identify key or essential features of the claimed subject matter, nor is it intended to be used to limit the scope of the claimed subject matter.

The systems and methods described herein address the robotic abrasive processing problem of offering domain and problem-specific optimal processes based on per-part geometry and inspection/feedback along with the ability to learn new processes and/or adapt to the customer's process deviations. The systems and methods described herein serve as a digitization of traditional application engineering techniques in a way that stands to revolutionize the way abrasives are consumed by offering cost-effective optimal solutions that are tailored to both the customer's application and a particular abrasive product of the abrasives manufacturer in a way that protects domain-specific knowledge of the customer and the abrasives manufacturer. Though described for providing robotic paint repair, which includes repair of primer, paint, and clear coats, it will be appreciated that the techniques described herein lend themselves to other industrial applications beyond paint repair.

Sample embodiments of a computer-implemented method of providing robotic paint repair as described herein include the steps of receiving coordinates of each identified defect in a substrate along with characteristics of each defect, communicating coordinates of an identified defect in the substrate to a robot controller module along with any additional data needed for the robot controller module to control a robot manipulator to bring an end effector of the robot manipulator into close proximity to the identified defect on the substrate, providing characteristics of the defect and a current state of at least the end effector of the robot manipulator to a policy server, receiving a repair action from the policy server based on a previously learned control policy, and executing the repair action by communicating instructions to the robot controller module and end effector to implement the repair action. In sample embodiments, the repair action includes at least one of set points for RPM of a sanding tool, a control input for a compliant force flange, a trajectory of the robot manipulator, and total processing time. The repair action may include sanding the substrate at the location of the identified defect and polishing or buffing the substrate at the location of the identified defect.

In sample embodiments, the trajectory of the robot manipulator is communicated to the robot manipulator as time-varying positional offsets from an origin of the defect being repaired. A processing device also receives characteristics of each defect including locally collected *in-situ* inspection data from end effector sensors. In such case, the method includes the further steps of providing the *in-situ* data to a machine learning unit for creating learning updates using at least one of fringe pattern projection, deflectometry, and intensity measurements of diffuse reflected or normal white light using a camera. In the sample embodiments, the steps from providing characteristics of the defect and a current state of the end effector to the policy server to the step of providing the *in-situ* inspection data are repeated until the identified defect is satisfactorily repaired.

In other embodiments, the processing device further receives quality data relating to a quality of a repair resulting from the repair action and provides the characteristics of the defect and the quality data to the policy server for logging. The characteristics of the defect also may comprise unprocessed, raw images.

In still other embodiments, the processing device implements a machine learning module that runs learning updates to improve future repair actions from the policy server based on a particular identified defect and subsequent evaluation of an executed repair. The processing device also may identify a repair as good or bad using sensor feedback collected during and/or after execution of the repair action and implement reinforcement learning to develop a repair action for an identified defect. The reinforcement learning is implemented by mapping raw images of identified defects to repair actions, assigning rewards based on a quality of the repair action, and identifying a policy that maximizes the reward. In alternate embodiments, the method may further include finding the learned control policy using physically simulated defects. The learned control policy also may use abrasive utilization data to enable decisions based on remaining abrasive life.

The reinforcement learning also may be implemented as a reinforcement learning task based on a Markov Decision Process (MDP). The MDP may be a finite MDP having tasks implemented in an MDP transition graph using at least the states of Initial, Sanded, Polished, and Completed, wherein the Initial state is augmented to include the identified defect in its original, unaltered state, the Sanded state and the Polished state occur after sanding and polishing actions, respectively, and the Completed state marks an end of the repair process. In optional configurations, the Sanded state and Polished state includes locally collected *in-situ* inspection data from end effector sensors.

In still other embodiments, the tasks implemented in the MDP transition graph includes actions comprising at least one of complete, tendDisc, sand, and polish, wherein the complete action takes a process immediately to the Completed state, tendDisc action signals the robot manipulator to wet, clean, or replace an abrasive disc for the end effector, and the sand action and the polish action are implemented using parameters including at least one of RPM of a sanding tool of the end effector, applied pressure, dwell/process time, and repair trajectory for the robot manipulator. The sand action and the polish action may be continuous parametric functions for continuous parameters. The tasks implemented in the MDP transition graph may further include a single tendDisc action followed by a single sanding action followed by a single polishing action.

The methods are implemented by a robotic paint repair system. In sample embodiments, the robotic repair system includes: a robot manipulator that controls an end effector including at least one of sanding and polishing elements for at least one of sanding and polishing a substrate, a robot controller module that controls movements and operation of the robot manipulator, a policy server that maintains a current learned policy or policies relating an identified defect to one or more repair actions and provides control outputs based on state and observation queries, and a control unit. The control unit has one or more processors that process instructions to implement the steps of receiving coordinates of each identified defect in the substrate along with characteristics of each defect, communicating coordinates of an identified defect in the substrate to the robot controller module along with any additional data needed for the robot controller module to control the robot manipulator to bring the end effector into close proximity to the identified defect on the substrate, receiving a repair action from the policy server based on defect characteristics and a previously learned control policy, providing characteristics of the defect and a current state of at least the end effector of the robot manipulator to the policy server, and executing the repair action by communicating instructions to the robot controller module and end effector to implement the repair action. The control unit further includes instructions for implementing the other steps of the method as described herein.

Any one of the foregoing examples may be combined with any one or more of the other foregoing examples to create a new embodiment within the scope of the present disclosure.

### BRIEF DESCRIPTION OF THE DRAWINGS

In the drawings, which are not necessarily drawn to scale, like numerals may describe similar components in different views. The drawings illustrate generally, by way of example, but not by way of limitation, various embodiments discussed in the present document.
**FIG. 1** illustrates robotic paint repair for OEM and aftermarket applications.
**FIG. 2** illustrates the components of a robotic paint repair stack broken down schematically.
**FIG. 3** illustrates robotic paint repair including a learning component and cloud-based process planning and optimization in accordance with a sample embodiment.
**FIG. 4** illustrates a sample process flow of a sample embodiment for robotic paint repair in a sample embodiment.
**FIG. 5** illustrates a Markov Decision Process (MDP) transition graph of a sanding and polishing process suitable for reinforcement learning in a sample embodiment.
**FIG. 6** illustrates a simplified MDP transition graph of a sanding and polishing process suitable for reinforcement learning in a further sample embodiment.
**FIG. 7** illustrates a high-density defect learning substrate where the defect caused by introducing synthetic dirt of a particular size under the clear coat is most visible at the boundaries of the ceiling light reflection.
**FIG. 8** illustrates sample polishing patterns.
**FIG. 9** illustrates an example of high-efficiency nesting of the polishing patterns.
**FIG. 10** illustrates Micro-Epsilon reflect CONTROL paint defect images provided by the manufacturer.
**FIG. 11** shows eight images, four of a deflected vertical fringe pattern and four of a deflected horizontal fringe pattern each shifted by multiples of π/2.
**FIG. 12** shows the horizontal and vertical curvature maps computed using the arc tangent of pixels across the four deflected fringe patterns with subsequent phase unwrapping.
**FIG. 13** is the composite (square root of the sum of squares) local curvature map combining both the horizontal and vertical results visualized as both an intensity map and mesh grid.
**FIG. 14** shows a sample near dark field reflected image.
**FIG. 15** illustrates a general-purpose computer that may be programmed into a special purpose computer suitable for implementing one or more embodiments of the system described in sample embodiments.

### DETAILED DESCRIPTION

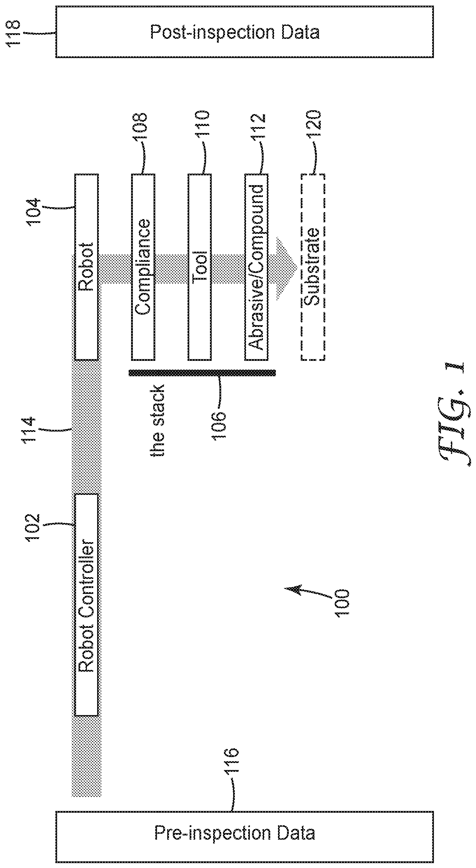

It should be understood at the outset that although an illustrative implementation of one or more embodiments are provided below, the disclosed systems and/or methods described with respect to FIGS. 1-15 may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

The functions or algorithms described herein may be implemented in software in one embodiment. The software may consist of computer executable instructions stored on computer readable media or computer readable storage device such as one or more non-transitory memories or other type of hardware-based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

### OVERVIEW

Systems and methods are described for automating the process of repairing defects for paint applications using automated abrasive processing and subsequent polishing. The systems and methods include novel combinations of robotic (smart) tools and/or part handling, sensing techniques, stochastic process policy that results in desired system behavior based on current part/system state and provided feedback, and an optional learning component capable of optimizing provided process policy, continuously adapting the policy due to customer's upstream process variations, and/or learning the process policy from scratch with little-to-no human intervention.

Recent advancements in computational power have made feasible the process of clear coat inspection at production speeds. In particular, stereo deflectometry has recently been shown to be capable of providing paint and clear coat defects at appropriate resolution with spatial information to allow subsequent automated spot repair. Using conventional inspection methods, an automated clear-coat spot repair system 100 in a sample embodiment might look like the schematic drawing of FIG. 1 for automotive OEM applications. In FIG. 1, the respective boxes represent various hardware components of the system including robot controller 102, robot manipulator 104, and robotic paint repair stack 106 including compliance force control unit 108, tooling 110, and abrasive articles/compounds 112. The flow of data is depicted by the background arrow 114 which starts with pre-inspection data module 116 that provides inspection data including identified defects in the substrate and ends with post-inspection defect data module 118 for processing data generated from the substrate 120 during the defect repair process.

In a sample embodiment, substrate 120 may be the car body itself, and the finish can be any state of the car throughout the entire manufacturing process. Typically, the car or panels of interest have been painted, clear-coated, and have seen some form of curing (e.g., baking) and are checked for defects. In operation, the defect locations and characteristics are fed from the pre-inspection data module 116 to the robot controller 102 that controls robot manipulator 104 on which a program guides an end effector (stack) 106 to the identified defect to execute some pre-determined repair program (deterministic) policy. In some rare cases, the policy might be able to adapt depending on the provided defect characteristics.

For paint repair applications, the robotic paint repair stack 106 comprises abrasive tooling 110 and abrasive articles and compounds 112 along with any ancillary equipment such as (compliant) force control unit 108. As used herein, the robotic paint repair stack 106 is more or less synonymous with the term end effector; however, in this document the term "stack" is the end effector in the context of robotic paint repair. Also, though described for providing robotic paint repair, which includes repair of primer, paint, and clear coats, it will be appreciated that the techniques described herein lend themselves to other industrial applications beyond paint repair.

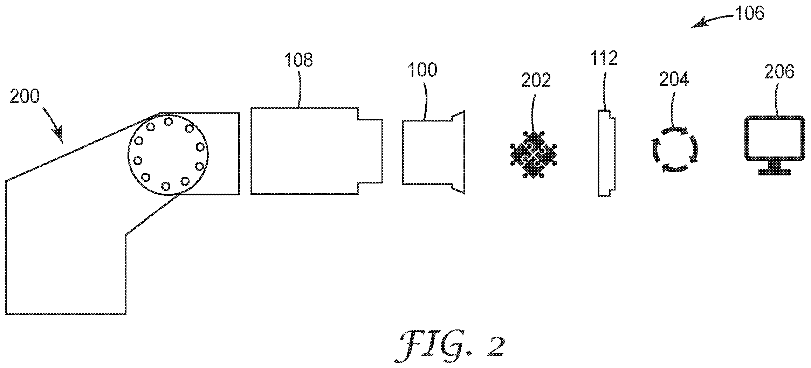

FIG. 2 illustrates the components of the robotic paint repair stack 106 broken down schematically. As illustrated, the robotic paint repair stack 106 comprises a robot arm 200, force control sensors and devices 108, a grinding/polishing tool 110, a hardware integration device 202, abrasive pad(s) and compounds 112, a design abrasives process 204, and data and services 206. These elements may work together to identify defect locations and to implement a predetermined repair program using a deterministic policy for the identified defect.

FIG. 1 and FIG. 2 thus implement the rather straightforward approach of automating clear-coat repair based on newly available inspection methods (*i.e.,* deflectometry). The embodiments of the systems and methods described below differentiate from the system and method of FIG. 1 and FIG. 2 by utilizing additional data from the inspection, work-cell, or tooling to modify in real-time on a per-defect basis the robotic program (*i.e.,* policy) for the repair. In this respect, the program adapts based on observations to execute an optimal (or near-optimal) repair strategy (policy) that is on the spectrum between a deterministic empirically-derived recipe (tech service/application engineering) and a stochastic policy that is constantly improved based on performance (*i.e.,* reinforcement learning). Additionally, other forms of learning may be applied such as classification (supervised learning) or clustering (unsupervised learning) to help perform dimensionality reduction on the sensing data or the like. These approaches together comprise a learning module that will be described with respect to a sample embodiment below.

### Sample Embodiment

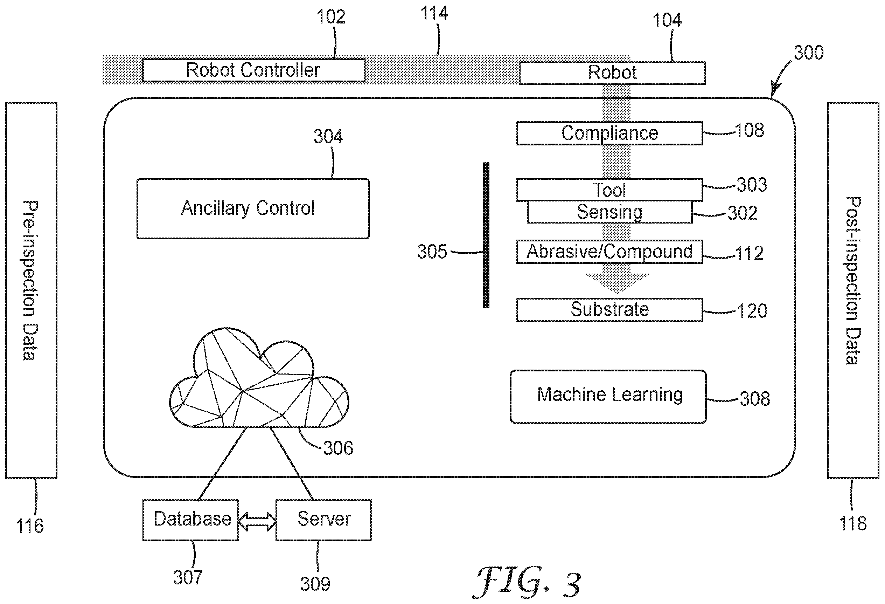

FIG. 3 illustrates a sample embodiment of a robotic paint repair system including a learning component and cloud-based process planning and optimization. In the embodiment of FIG. 3, the robotic paint repair stack 300 has been augmented from the robotic paint repair stack 106 discussed above to further include additional sensors 302, smart tooling 303, ancillary control unit 304, and a cloud computing system 306 including a database 307 that is local or maintained in the cloud computing system 306 and is responsible for executing and maintaining the control policy for the paint repair stack 300 including those policies and procedures recommended by a machine learning unit 308 and maintained by policy server 309. The database 307 and policy server 309 may be in the cloud or in local on-site servers or edge computers.

The ancillary control module 304 takes the place of the deterministic code previously residing in the robot controller 102 and provides the immediate real-time signals and processing for execution of the robot manipulator 104 and smart tooling 303. In this regard, the robot manipulator 104 now serves a reactionary role in the system 300 driven by the ancillary controller 304. The database 307 of the cloud computing system 306 serves as a long-term data repository that stores observations of processing including state variables, measurements, and resulting performance that are correlated with identified defects to generate policies implemented by the policy server 309. Finally, the machine learning module 308 is responsible for continuously improving the repair policy based on observations (state/sensor data) and subsequent reward (quality of repair). Online learning is accomplished by a form of reinforcement learning such as Temporal Difference (TD) Learning, Deep Q Learning, Trust Region Policy Optimization, *etc.*

In the embodiment of FIG. 3, the robot manipulator 104 is capable of sufficiently positioning the end effector (stack) tooling 305 to achieve the defect inspection and repair described herein. For the problem domain (primer/paint/clearcoat repair) described herein with respect to sample embodiments, the defects are generally on the outer auto-body surface of a substrate 120 (an assembly of multiple shaped pieces of sheet metal, plastics, carbon fiber, *etc*.) which generally exhibits 2D-manifold structure (*i.e*., it is locally "flat" or "smooth"). While lower degree of freedom systems could be used in theory, industry-standard six degree of freedom serial robot manipulators have been found to be the best fit for this process. Some examples include Fanuc's M-20 series, ABB's IRB 1600, or Kuka's KR 60 series. For example, the Kuka KR 60 HA has 6 axes and degrees of freedom, supports a 60 kg payload, and has a 2.033 m reach. Process-specific tooling (*i.e.,* the end effector) is covered in more detail in the description of the stack 305 below.

The robot controller module 102 is the robot OEM provided controller for the selected robot manipulator 104. The robot controller module 102 is responsible for sending motion commands directly to the robot manipulator 104 and monitoring any cell-related safety concerns. In practice, the robot controller module 102 generally includes a robot controller in conjunction with one or more safety programmable logic controllers (PLCs) for cell monitoring. In a sample embodiment, the robot controller module 102 is setup to take input from the ancillary control unit 304 that provides defect-specific information and/or commands. This happens, depending on the desired implementation, either off-line via program downloads or parametric execution of pre-determined functions or in real-time via positional/velocity offset streaming. An example of the offline approach would be a pre-processed robot program in the native robot's language (e.g., RAPID, KRL, Karel, Inform, *etc*.) that gets run by the robot controller module 102. On the other hand, example streaming interfaces would be through robot OEM provided sensor interface packages such as Fanuc's Dynamic Path Modification package or Kuka's Robot Sensor Interface. In this real-time embodiment, the ancillary controller 304 (described in further detail below) would send on-line, real-time positional offsets to the robot controller module 102 based on the defect being repaired.

In a sample embodiment, the Kuka KR C4 controller with KUKA.RobotSensorInterface option package for on-line real-time streaming of positional corrections may be used as robot controller 102 with the Kuka KR 60 HA robot manipulator 104.

In the embodiment of FIG. 3, the pre-inspection data module 116 and the post-inspection data module 118 provide the body-wide inspection data for each car or part to be processed. The type of sensor 302 required here depends on the characteristics of the problem at hand (*i.e*., primer or clear-coat repair). In particular, the specularity of the surface of the substrate 120 drives the selection of the sensor 302. For highly specular (reflective) surfaces, reflective approaches are usually selected with one of the leading techniques being calibrated stereo deflectometry. For non-reflective scenarios (*i.e.,* primer repair), projection approaches are preferred. Both approaches are similar in their underlying mathematical principles and differ mainly by their surface illumination approach (*i.e.,* deflection/reflection vs projection). In addition to projection approaches, there is also a benefit to using diffuse reflected or unstructured light with conventional monochrome or RGB imaging for the non-specular or mixed scenarios.

In a sample embodiment for clear-coat repair and sufficient specularity of the auto body, a Micro-Epsilon reflectCONTROL imaging system is used for both pre-inspection module 116 and post-inspection module 118 enabling continuous on-site learning and policy improvements and process drift compensation.

The ancillary controller 304 serves as the central communication hub between the specialized paint repair end effector 305, the robot manipulator 104, and the cloud computing system 306 and/or local on-site servers or edge computers. The ancillary controller 304 receives all defect inspection data for the repair at hand (from pre-inspection data and/or any robot-mounted hardware such as end effector sensors 302) and transmits the resulting policy to the robot controller module 102 and end effector stack 305 as illustrated in FIG. 3. As noted above, this transmission can be either online or off-line depending on the particular implementation. Ancillary controller 304 is also responsible for controlling any proprietary end effector hardware 305 such as the compliant force control unit 108, air/servo tools, water/compound dispensers, sensors 302, and the like.

In a sample embodiment, the ancillary controller 304 comprises an embedded (industrially hardened) process PC running a real-time/low-latency Linux kernel. Communication to the robot controller module 102 (via the KUKA.RobotSensorInterface) is accomplished through UDP protocol. Communication to the various end effector components 305 may be a mix of UDP, TCP, (serial over) USB, digital inputs/outputs, *etc.*

The stack (end effector tooling) 305 may include any process-specific tooling required for the objective in sample embodiments. With respect to embodiments including material removal (sanding, primer repair, clear-coat repair, polishing, *etc.*)*,* some form of pressure/force control and or compliance is required. In general, the robot manipulator 104 itself is too stiff to adequately apply the correct processing forces for clear-coat repair and thus some form of active compliance is often necessary or desirable. Besides the tooling 303 and abrasive system 112, the sensors 302 are also desirable as *in-situ* inspection allows for local hi-fidelity measurements at process-time along with the ability to acquire feedback mid-process, which is not achievable with approaches using only pre-inspection and post-inspection. For example, mid-process feedback is helpful to a successful learning algorithm.

For the application of robotic paint repair (and more broadly robotic sanding), desirable sensors for use as sensors 302 include (but are not limited to) the following:
1. Proprioceptive sensors that detect vibration using accelerometers or microphones and dynamics using RPM tools, joint efforts (*i.e.,* force, torque, accelerations, and/or velocities), linear (end effector) effort (*i.e.,* force and/or torque) including accelerations and/or velocities, and force/pressure tools.
2. Exteroceptive sensors including imaging sensors, temperature sensors, and/or humidity sensors. The imaging sensors may be visual sensors including RGB, monochrome, infrared, haze, reflectivity, and/or diffusivity sensors, or may be topographical sensors including RGB-D (structured light, time-of-flight, and/or stereo photogrammetry), stereo deflectometry, profilometry, and/or microscopy. The exteroceptive sensors may also include tactile sensors for elastomeric imaging (*i.e.,* GelSight).
3. Temperature sensors may also be used including thermocouples and/or IR thermal imaging.
4. Humidity sensors may also be used.

In a sample implementation for sanding, primer repair, clear-coat repair, and polishing applications, the abrasive/compound 112 may comprise a 3M Trizact Finesse-it abrasive system used with a 3M air-powered random orbital sander as tool 303. In such a sample implementation, the compliance force control unit may comprise a FerRobotics ACF, and the sensors 302 may comprise a Pico projector, a 5-inch 4K LCD micro display, an Ethernet camera, and/or a GelSight unit. Further examples of sensors 302 are provided below.

The manual clear-coat repair process, at a high-level, is well known and accepted in the industry. It is a two-step process: abrasion/sanding and polishing/buffing. From an automation perspective, the following inputs and outputs may be of relevance in different embodiments (with examples from the 3M Finesse-it system):
Inputs:
   Shared (sanding and polishing)
      Tool speed [frequency]
      Tool orbit [length]
      Randomness (*i.e.,* random orbital vs. orbital)
      Path pattern
      Path speed [velocity]
      Applied force
      Angle (*i.e.,* off normal)
      Total process time
   Sanding-specific
      Backup pad
         Hardness
      Abrasive Disc
         Product
            *e.g*., {468LA, 366LA, 464LA, 466LA}
         Grade
            *e.g.,* {A3, A5, A7}
         Diameter / Scallop
            *e.g.,* {1-1/4", 1-3/8" scalloped}
         State
            Age (*e.g., age* ≈ *f*(*pressure, time*))
            Cleanliness (*e.g.,* has the disc been cleaned?)
   Polishing-specific
      Buffing pad
         Foam
            *e.g.,* {Gray, Orange, Red, Green, White}
         Diameter
            *e.g.,* {3-1/4", 3-3/4", 5-1/4"}
         Surface profile
            *e.g.,* {flat, egg crate}
      Polish
         Amount
         Distribution
         Finish
            *e.g.,* {FM, P, EF, K211, FF, UF}
Outputs:
   Uniformity
   Roughness
   Gloss percentage
   Time to buff
   Final buff quality (*e.g.,* uniformity, haze, *etc*.)

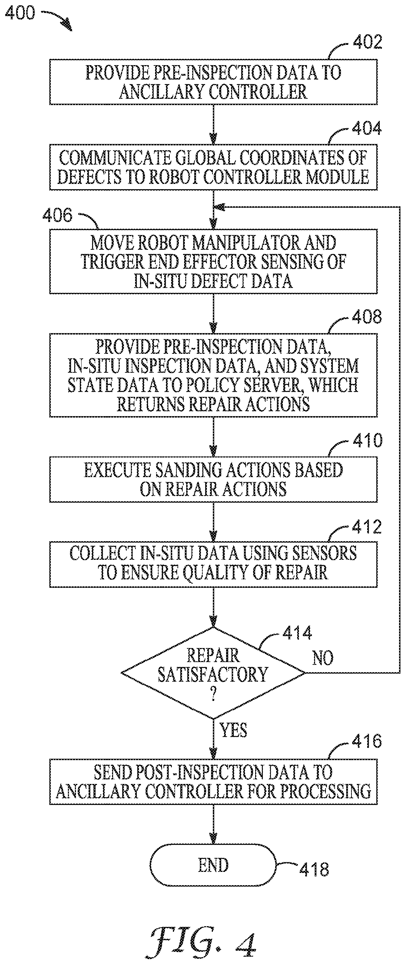

In a sample repair scenario, the process flow including such inputs and outputs may be implemented as illustrated in FIG. 4. As illustrated in FIG. 4, the process flow 400 includes providing pre-inspection data to the ancillary controller 304 from the from pre-inspection data module 116 at 402. The pre-inspection data contains global, body-centric coordinates of each identified defect along with (optional) geometric data/profiles and/or classification of the defect itself. Global coordinates of the identified defects are communicated to the robot controller module 102 at 404 along with any external axes such as conveyor belt position such that the robot manipulator 104 can bring the end effector into close proximity to the identified defects in succession. If the optional local defect information and/or classification was provided, this can be used to select defects to process or skip. Then, the ancillary controller module 304 in conjunction with the robot controller module 102 move the robot manipulator 104 and trigger end effector sensing by sensors 302 at 406 to take *in-situ* local defect inspection data using local uncalibrated deflectometry information.

At 408, the pre-inspection data, *in-situ* inspection data, and current state of the system (*e.g.,* loaded abrasive/compound, abrasive life, current tooling, *etc*.) is transferred to the policy server 309 in the cloud computing system 306, which takes all of the inspection data and current system state and returns repair actions using a previously learned control policy. Returned sanding actions (step one of two-part repair) from the learned policy are then executed at 410 by the ancillary controller through simultaneous communication with the robot controller module 102 and end effector stack 305. Actions in this example include set points for tool RPM, pressure (control input into compliant force flange), robot trajectory, and total processing time. In a sample embodiment, the robot trajectory is communicated as time-varying positional offsets from the defects origin using the KUKA.RobotSensorInterface package interface. *In-situ* data is collected using sensors 302 to ensure quality of repair. The *in-situ* data is saved for later learning updates using fringe pattern projection or traditional imaging using monochrome/RGB cameras and diffuse reflected or unstructured white light to capture diffuse reflections from the newly abraded areas.

Any *in-situ* imaging data can, in addition to driving the selected repair policy, be used to localize/servo off of the defect when guiding the robot and thus eliminate any error in the manufacturing system. In general, the global pre-inspection data, if collected, is taken significantly upstream in the manufacturing process and positioning error can easily be on the order of inches by the time the part reaches the paint repair station.

If it is determined at 414 that the repairs are not satisfactory, steps 406-412 may be repeated until the repair is deemed satisfactory, but such iterations are not needed in the case of an optimal repair policy execution.

Steps 406-414 also may be repeated for buffing commands (step two of two-part repair) returned from the policy server 309 in the cloud computing system 306.

Finally, post-inspection data is collected by the post-inspection data module 118 on final quality of repair at 416 and the post-inspection data is sent to the ancillary controller 304 for processing. All data (pre-inspection, *in-situ,* and post-inspection) is sent to the policy server 309 in the cloud computing system 306 for logging and for learning updates. The process then ends at 418.

The policy server 309 has been described herein as located in the cloud computing system 306. However, it will be appreciated that the policy server 309 may be located local to the remainder of the robotic paint repair stack 300 on the manufacturing floor depending on the desired implementation and/or security needs. In operation, the policy server maintains the current learned policy (or policies) and provides control outputs based on state and observation queries. The policies are obtained through an appropriate learning algorithm (described below). The particular nature of the outputs of the policy server 309 depends on the communication mode used by the ancillary controller 304 (*i.e.,* online or off-line). In an off-line approach, the outputs of the policy server 309 correspond to process parameters such as dwell time, pressure, speed, *etc.* On the other hand, an online approach is capable of outputting a policy that directly controls the efforts at the robot's joints (actuators). In this scenario, latency is an issue and usually requires a local (non-cloud-based) policy server 309.

In a sample cloud-based configuration of the policy server 309, the policy server 309 receives pre-inspection data, and system state as input and outputs process time, process pressure, process speed (RPM), orbit pattern (tooling trajectory), and the like. The policy server optionally may also receive *in-situ* inspection data.

The machine learning unit 308 is a module that runs in tandem with the policy server 309 and runs learning updates to improve the policy when requested. The machine learning procedure includes learning good policies for defect repair where a policy is simply a mapping between situations (defect observations) and behavior (robot actions / repair strategy). Ideally, the machine learning system 308 provides super-human performance and thus cannot assume that a significantly large labeled dataset of defect and repair strategies exists. Because the existing knowledge may be incomplete, the system does not use supervised learning techniques as a total solution. However, the system does have the ability to identify a repair as good or bad (or anywhere in between) using sensor feedback collected during processing and further has the ability to use reinforcement learning to address the lack of a large labeled dataset of defect and repair strategies.

Reinforcement learning is a class of problems and solutions that aim to improve performance through experience. In general, a reinforcement learning system has four main elements: a policy, a reward function, a value function, and an optional model of the system. The policy is mainly what one is interested in finding as it maps perceived states of the system to actions. In the sample scenario described herein, this is a mapping between defect images and robot repair actions. The images can be pre-processed and/or have features extracted but these are not requirements. The reward function defines the goal of the problem as a mapping between states (or state-action pairs) and a single numerical reward that captures the desirability of the situation. The goal of the system is to identify a policy that maximizes the reward. The value function is a prediction of future rewards achievable from a current state which is used to formulate policies. The optional model is an approximation of the environment that can be used for planning purposes.

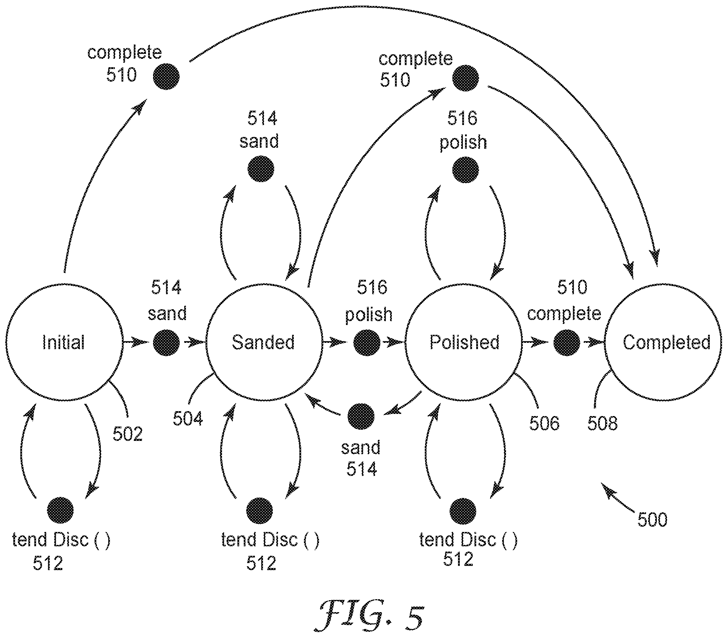

In general, most reinforcement learning tasks, including those used in sample embodiments, satisfy the Markov property and constitute a Markov decision process (MDP). At a high-level, the defect repair problem of a sanding and polishing process using machine learning can be represented as a finite MDP by the MDP transition graph 500 illustrated in FIG. 5. In the MDP transition graph 500 of FIG. 5, the task is represented using four states with S = {Initial (502), Sanded (504), Polished (506), Completed (508)}. The Initial state 502 is the defect in its original, unaltered state. The Sanded state 504 and the Polished state 506 occur after sanding and polishing actions, respectively, and the Completed state 508 marks the end of the repair (as well as the end of the learning episode). On the other hand, the actions are represented by the set A = {complete (510), tendDisc() (512), sand() (514), polish() (516)}. As illustrated, the complete action 510 takes the system immediately to the (terminal) Completed state 508. A Complete action 510 from the Initial state 502 is analogous to a "do not repair" scenario and gives the system the ability to opt out of repairs for cases where the defect is irreparable and/or a repair would leave the system in a worse state than its original state. The tendDisc() 512 action signals the robot manipulator 104 to either get a new abrasive disc 112 for the end effector stack 305, apply water to the current disc 112, or perform a cleaning operation of the current disc 112 to remove loaded material. In general, the abrasive life is greater than a single repair. However, the performance of the abrasive disc 112 over time is not constant. Having this action allows the system to (optimally) decide when a new abrasive disc 112 is necessary or desirable. Additionally, an optimal policy will consider the disc's learned abrasive life compensation and select repair actions accordingly (*e.g.,* as the pad wears/loads more force might be required, *etc.*) The final two actions, sand() 514 and polish() 516, are the processing functions and are in general parametric. The parameters include processing information such as tool RPM, applied pressure, dwell/process time, repair trajectory, *etc.* A number of different parameterizations are possible depending upon the nature of the identified defect and the repair action to be taken.

Although the problem has been expressed as a finite MDP, it will be appreciated that each state and action live within continuous domains. For example, the Sanded state 504 from a high-level represents the defect after sanding has occurred but the state itself includes imaging data of the defect after sanding that is inherently high-dimensional and continuous. Additionally, the sand and polish actions 514 and 516, respectively, are parametric functions where the parameters themselves are continuous.

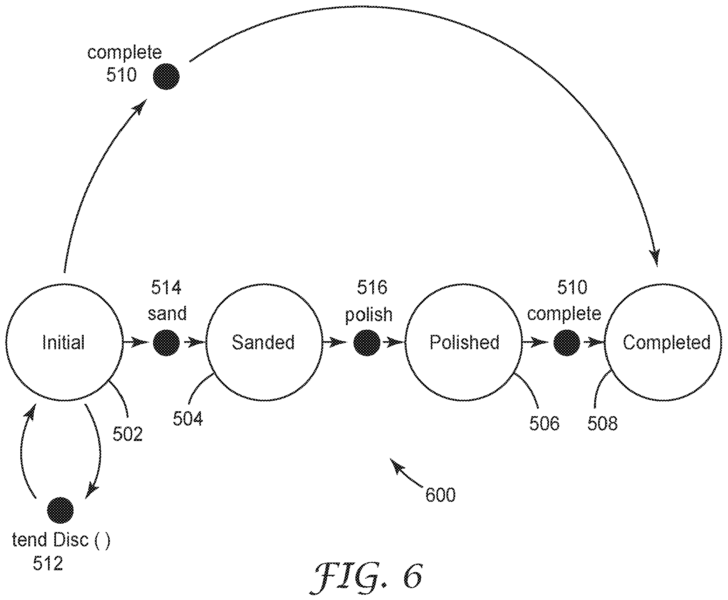

An alternate simplified MDP transition graph 600 as shown in FIG. 6 is possible where a perfect repair consists of a single sanding action 514 followed by a single polishing action 516. The MDP transition graph 600 reduces the number of actions at any given state and thus the dimensionality of the problem at hand. While the MDP transition graph 600 constitutes a simplification, the problem can be expressed much more generally in a fully continuous manner where the state is expanded to include the robot's joint positions/velocities and the actions expanded to consist of position, velocity, or effort commands. In this scenario, the robot manipulator 104 is given no empirical domain knowledge of the repair process in the form of finite state transitions and instead has to learn real-time control actions that achieve the desired process. However, this problem formulation requires significantly more experience to converge to useful policies and is arguably unnecessarily general for the industrial task at hand.

In use, the system continues to take images and to provide sensor feedback in-process that is used to adjust system parameters on the fly.

A sample embodiment of the machine learning system may also be implemented on the illustrated automated robotic clear-coat defect repair system. Two possible algorithm implementations are described: one for each of the MDP transition graphs illustrated in FIG. 5 and FIG. 6. For both examples, the same hardware setup is used, including a robot manipulator 104 and robot controller 102 implemented using a Kuka KR10 R900 sixx with a KR C4 compact controller; tooling 303 including a robot-mounted custom random orbital sander (ROS) in conjunction with a FerRobotics ACF/111/01 XSHD active contact flange; an abrasive/polishing disc including a 3M Finesse-it system (e.g., 3M Trizact abrasive discs with 3M polish and corresponding backup pads / accessories); and sensors 302 comprising 5" 4K LED display, 1080P Pico projector, and a 5 MP color CCD camera for imaging in both the specular (deflectometry) and diffuse (fringe projection) modalities.

Using the above setup, the system and method described above was applied using the larger n-step MDP transition graph of **FIG. 5****.** In this case, Deep Deterministic Policy Gradients (DDPG) were used along with Hierarchical Experience Replay (HER) and sparse rewards (via pre-trained classifier).

The system and method described above was also applied using the simplified smaller 2-step MDP transition of **FIG. 6** assuming the processing steps of sanding and polishing with imaging immediately before each step. In this case, Deep Deterministic Policy Gradients (DDPG) were again used but instead image-based shaped rewards (similar to work of Perceptual Reward Functions) were used based on similarity measures of the repaired area compared to the "good" surrounding area. This approach is based on the observation that a perfect repair is indistinguishable from the surrounding un-repaired good area.

The system and method described above was also applied using the simplified smaller 2-step MDP transition of **FIG. 6** assuming the processing steps of sanding and polishing with imaging immediately before each step. In this case, the continuous parametric actions were used with discretized parameters as inputs, thus enabling the use if Deep Q-Learning (DQN). This case can use either sparse or shaped rewards.

### Data Collection

An important issue in any reinforcement learning problem is generating enough experience for the learning algorithm to converge to the desired optimal policy. In industrial processing applications, generating sufficient experience is a significant issue and is often prohibitively expensive and/or time consuming. One common approach across all of reinforcement learning is to leverage sufficiently good computer (digital) simulations for experience generation. For industrial tasks, however, and processing in general, the task of building an accurate computer simulation can be as difficult or even harder than the problem of finding an optimal policy. That said, it is often important to find efficient and clever ways to produce low-cost, data-rich real-world experience. In this respect, physical simulations are generated that sufficiently mirror the actual manufacturing process of interest.

With respect to the domain at hand, robotic paint repair, the problem is even more difficult due to the fact that the process is inherently "destructive" in nature and thus irreversible (*i*.*e.,* any processing applied to a paint defect will alter the state of the defect). Embodiments are oulined below for both a data collection procedure and defective part creation.

### Defect Simulation

Some form of simulation (digital or physical) is often desirable in order to generate sufficient amounts of experience for applied learning algorithms. Several possible methods are outlined below in the context of paint repair.

It is first noted that a significant majority of paint repairs occur on car body regions that exhibit 2D-manifold structure (*i*.*e*., they are locally flat in the context of a single repair). High curvature areas of an autobody (*e.g.,* around trim, door handles, *etc*.) are the exception but, in general, learned policies from flat surfaces can be applied to curved surfaces with some robot trajectory modification. With this in mind, a convenient (from both a cost and handling perspective) standardization is to use flat painted substrates for a majority of the data collection and experience generation.

Flat rectangular painted test panels are commercially available on a number of different substrates with a number of different thicknesses, sizes, paints, clear coats, under coats, *etc.* available. Panels can either be purchased from such a commercial source or prepared using the same or similar methods and equipment as the process to be learned.

Ideally, no paint defects would ever be introduced on the manufacturing parts and thus the manufacturing process is designed to produce the best parts possible. Realistically, defects do exist; however, from a reinforcement learning perspective the defect density on any production part or simulated test/learning substrate is relatively low. Every manufacturing process is different in terms of quality, but it is not uncommon to have on the order of less than one defect per thousand square inches of paint. Thus, it can become very expensive to find sufficient amounts of defects to generate experience for the learning algorithm.

To solve this problem, methods of generating sufficiently dense defective substrates have been developed. For any convenient standard sized flat substrate, defective paint and/or clear coat with defect density on the order of greater than one per square inch are generated. The exact density is adjustable, but the particular density results in a high probability that any arbitrary grid discretization of a learning substrate will contain at least one defect.

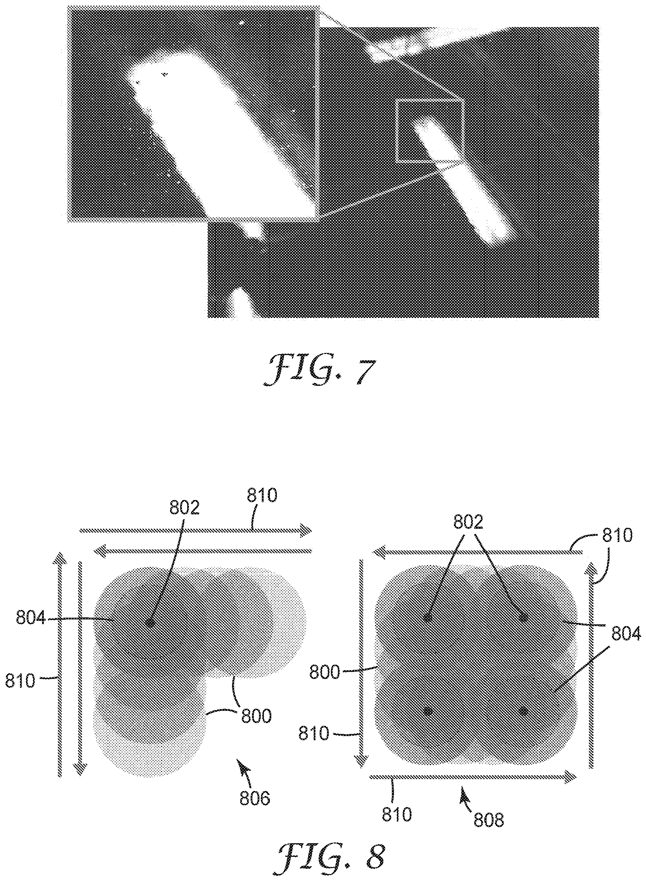

It is possible to mimic a majority of naturally occurring defects of interest such as nibs (contaminates), craters, fish-eyes, drips, sags, *etc.* by utilizing combinations of (synthetic) contaminates, silicone, paint / clear coat spray rates/patterns, solvent, *etc.* FIG. 7 shows the result of introducing synthetic dirt of a particular size under the clear coat. FIG. 7 illustrates a high-density defect learning substrate where the defects are most visible at the boundaries of the ceiling light reflection. To make this learning substrate, one starts with a commercially available painted and clear-coated test panel. The panel was sanded in its entirety (using 3M Trizact 6-inch disc on a random orbital tool) and then treated with the synthetic dirt before re-applying the clear coat and final curing.

An additional method involves using sufficiently thin panels and punching the back-side in a controlled manner (*e.g.,* with a spring-loaded punch) to create a raised defect on the top. While convenient, such defects do not always mimic the exact repair behavior as those occurring naturally and in OEM settings.

### Data Collection Procedure

The following is an example procedure for collecting defect repair data. The system performs defect repairs on the substrate at a number of discrete pre-determined locations regardless of type, number, and/or presence of defects (see below for example discretization and discussion). Learning/optimization algorithm differences aside, the basic processing structure of a single substrate is as follows:
For provided substrate *q* 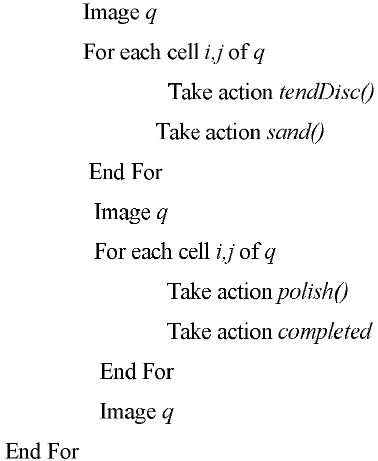 The specified states Sanded and Completed are taken from the MDPs of FIG. 5 and FIG. 6 and any parameters taken by actions are provided by the specified learning/optimization algorithm.

As outlined, the substrate is first imaged and then subsequently presented to the robot for sanding. The substrate is secured via a hold-down mechanism (*e.g.,* magnets, vacuum, clamps, *etc.*). On a per-cell basis of the predefined grid, the algorithm first performs disc tending via the tendDisc() action. This results in some combination of cleaning, wetting, and/or changing of the abrasive disc. The sand() action is then taken based on the imaging data (defect characteristics) current provided policy via the policy server.

After each grid location is sanded, the panel is then imaged again before polishing. Again, on a per-cell basis, the robot polishes each of the substrate's pre-determined grid locations with specified polish applied to each grid cell. After polishing the panel is again imaged.

After an entire panel is processed as above, defect characteristics via imaging data are available for each of the grid cells before, during, and after the repair process. Additionally, the executed policies are stored for each cell in conjunction with the characteristic imaging data. Reinforcement learning updates are run for each of the cells after a prescribed number of substrates have been processed.

The above can be implemented on a spectrum of automation based on speed and cost requirements. A simple implementation might use separate robots for each of the sanding and polishing actions and a bench-top imaging setup where a human operator is responsible for moving substrates between the cells as well as changing discs when requested. A fully automated setup might include tool changing for the end effector and thus can be implemented with a single robot. Additionally, conveyors can be used for substrate handling or the imaging can happen within the robot cell via cell-mounted cameras or imaging end effectors.

With the above approach with high-density defect painted substrates and automated grid-based policy execution, it is desirable to make the grid discretization as tight as possible to maximize the used portion of each substrate. Provisions are made such that no repair interferes with its neighboring cells during the substrate processing procedure. One approach is to select the tightest cell discretization such that any particular repair action exists entirely within a single cell. This naive approach, while feasible, can result in poor utilization of the substrate.

Using the 3M Finesse-it system as an example, a sample discretization for efficient substrate processing is outlined. In this system, the sanding discs are significantly smaller than the buffing pads (*e.g.,* 1-1/4 inch diameter sanding pads vs 3-1/2 inch diameter buffing pads). Additionally, the throws on the random orbital tools are 1/4 inch and 1/2 inch respectively. Assuming circular trajectories with at least half-diameter overlap, the minimum repaired affected areas for the sanding and polishing are circles of diameters 2-1/4 inches and 6 inches, respectively. Here it can be seen that the required buffing area is much larger and thus contributes significantly to substrate waste by greatly limiting the repair cell nesting density.

To overcome this limitation, it is possible to devise a modified panel process procedure where polishing is shared amongst neighboring cells. An adjacent batch of cells can be sanded independently and then polished together using a polishing trajectory created from concatenation of the individual cells' polishing trajectories.

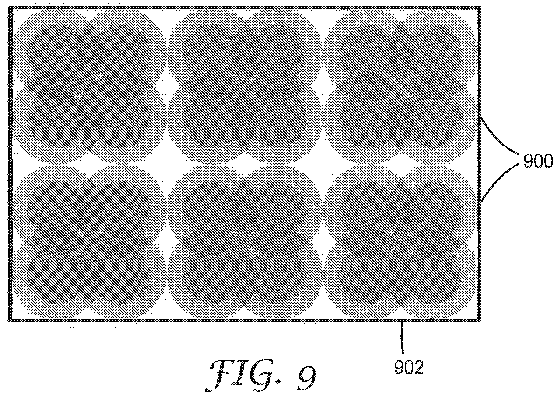

As an example, the 3M-Finesse-it-suggested "L" shaped polishing trajectory is used where the defect is at the bottom-left vertex of the "L" and the polishing pad is moved in alternating up-down and left-right motions. With this pattern, it is possible, through rotation and translation, to put four "L"s together to make a square. Thus, four cells can be sanded independently that together make a square and then polished using a square polishing trajectory. This method greatly improves achievable cell density and allows for up to 24 repair cells on a 12 by 18-inch substrate. FIG. 8 illustrates sample polishing patterns depicted by transparent circles 800. Defect locations are depicted as dots 802. Circles with dashed outlines represent the repair area 804. The "L" pattern 806 (left) and square pattern 808 (right) are represented by arrows 810 with numbers for each time the polisher stops. FIG. 9 illustrates an example of high-efficiency nesting of the polishing patterns 900 with the aforementioned Finesse-it accessory dimensions on an 18 by 24-inch panel substrate 902. Each set of four sanding repairs shares a single square polishing path in FIG. 8 (right).

### Defect Characteristics

In general defect characteristics can be taken as any combination of the following:
Engineered features (size, type, *etc*.)
Raw image data (matrix/tensor of intensity values)
Pre, mid (*in-situ*), or post-repair collected

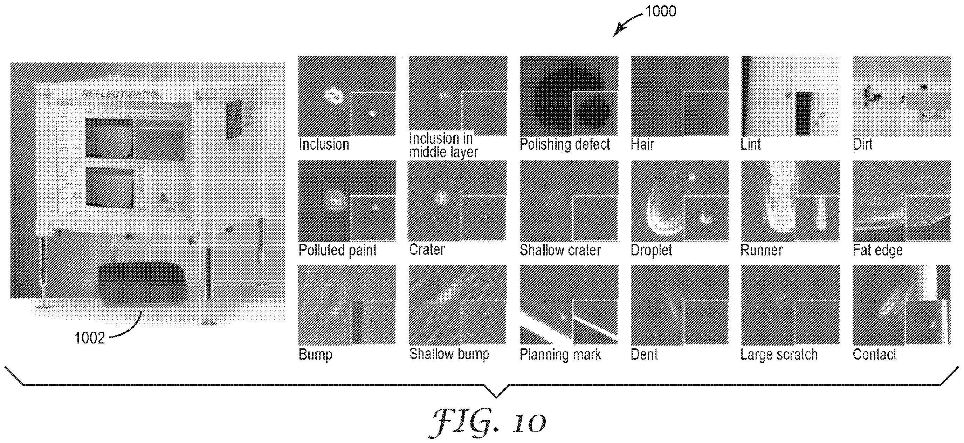

Current approaches use engineered features that are, in general, human-centric. That is, they exist based on historical expertise of the currently manual process. Such features include "meaningful" measures such as type of defect, size of defect, severity of defect, *etc.* In practice, each manufacturer has their own set of features and respective classifications that have evolved over time in the form of an operation procedure for the paint repair process. Additionally, many of the newer automated inspection offerings come with their own classifications and features. For example, FIG. 10 illustrates a series of paint defect images 1000 provided by a Micro-Epsilon reflect CONTROL device 1002. These classifications are traditionally engineered empirically based on human processing experience/expertise, but other approaches have used newer machine learning techniques such as supervised and unsupervised learning with success.

While seemingly attractive, a robotic process does not necessarily benefit from such human-centric features, classifications, and/or descriptors. By using reinforcement learning techniques along with deep neural networks, the system is given the freedom to learn its own representations internally via convolution kernels that best capture the defect characteristics in the context of the process domain (*i.e.,* robotic paint repair).

The inventors have found benefits to using unprocessed, uncalibrated, and/or raw imaging data in place of the aforementioned traditional engineered feature descriptors. Uncalibrated deflectometry data is used in a sample embodiment. This approach greatly relaxes the complexity of the system, as calibration, alignment, and processing are arguably the most difficult parts of implementing such vision processing. Additionally, the use of uncalibrated and/or raw imaging greatly reduces maintenance burdens and allows for smaller (robot mounted) systems that can take *in-situ* processing imaging and data. This can greatly improve both the learning rate of the system as well as improving the overall capability, performance, feedback, analytic options, *etc.*

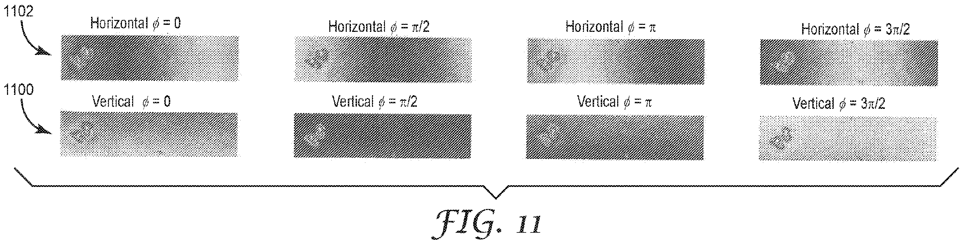

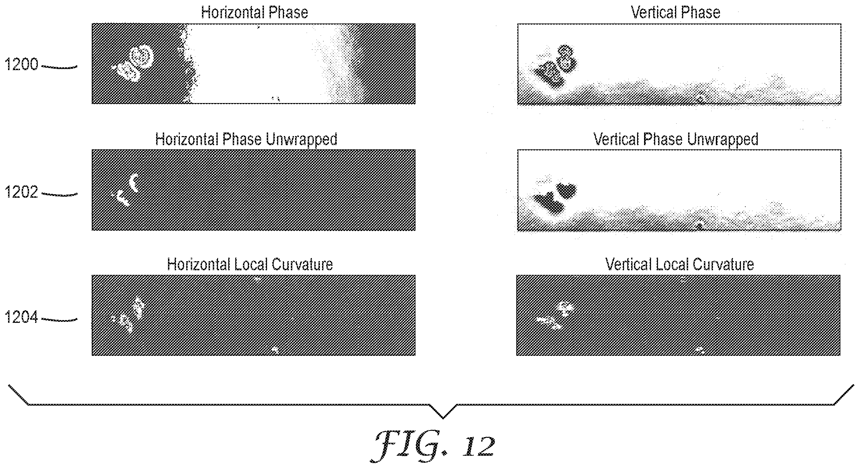

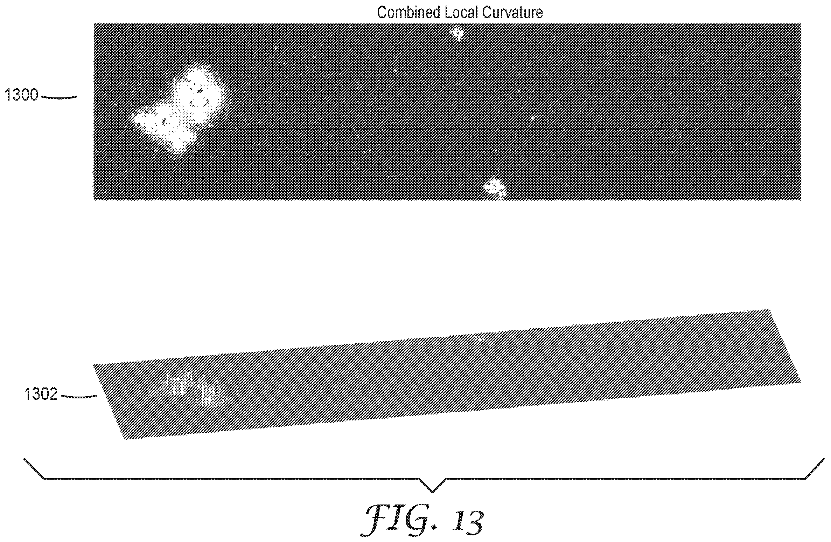

FIG. 11 - FIG 13 show how uncalibrated deflectometry images can be used to compute local curvature maps of the defects. FIG. 11 shows eight images, four of a deflected vertical fringe pattern 1100 and four of a deflected horizontal fringe pattern 1102 each taken where the pattern source was shifted by multiples of π/2. FIG. 12 shows the horizontal and vertical curvature maps computed using the arc tangent of pixels across the four deflected fringe patterns. The top 1200 are the results of the arc tangent (modulo 2π), the middle 1202 the unwrapped phase shifts, and the bottom 1204 the local curvature approximated using first-order finite pixel-wise differences. FIG. 13 is the composite (square root of the sum of squares) local curvature map combining both the horizontal and vertical results visualized as both an intensity map 1300 and mesh grid 1302.

The more common act of computing a height map of a surface using deflectometry requires integration of the measured phase shifts and thus is very sensitive to calibration and noise. Local curvature uses instead derivative and is thus less sensitive. Additionally, if one focuses only on a significantly small area (*i.e.,* a single defect repair) assumptions can be made that low-curvature features are not relevant (*i.e.,* 2D-manifold) and thus can utilize relative curvature as an indicator of defect size and intensity.

In the above example, the local curvature was manually extracted but only to show that such information exists within the raw imaging data and is useful. In practice, the reinforcement learning algorithm will discover similar (perhaps more relevant) features and mappings.

Another interesting use of the above example is in the construction of reward functions and defect classification. Local curvature maps provide a simple thresholding approach where a region is marked defective if the maximum local curvature exceeds some threshold.

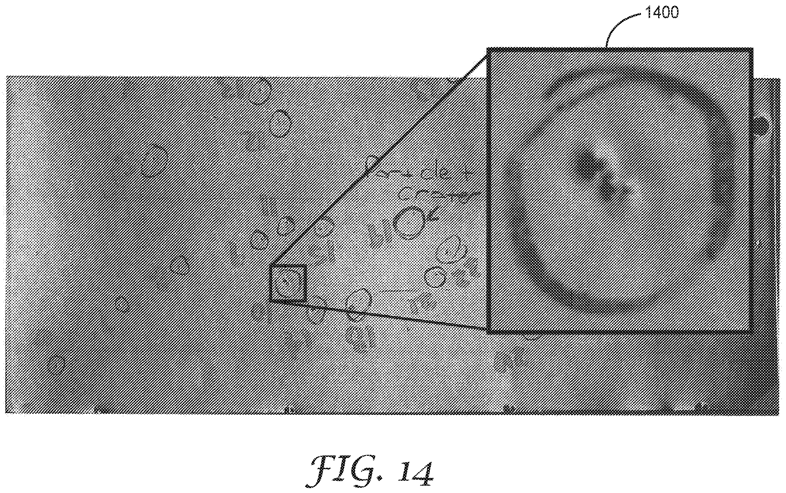

Utility may also be found in simpler approaches using near dark field reflected light and conventional imaging with unstructured white light and RGB/monochrome cameras. The former works on both specular (pre/post-processed) and matte/diffuse *in-situ* (mid-process) and the latter *in-situ.* FIG. 14 shows a sample near dark field reflected image 1400. In this method, the pixel intensity can be interpreted (with some assumptions regarding surface uniformity) as an approximation of the surface gradient (*i.e.,* slope). Thus, such images have the capability to provide surface/defect information without the computational burden of phase unwrapping as with deflectometry methods.

In the same way that reinforcement learning is capable of inferring its own feature representation, it is also capable of learning the effect of use on future performance of the abrasive. In other words, abrasives perform differently throughout their life. By encoding the usage of the disc in the MDP state augmentations, the policy can choose actions based on the predicted state of the abrasive. Some possible encodings include simply the number of repairs, or more complicated functions of force, time, *etc.* Another approach is to incorporate, via *in-situ* data collection from the end effector, performance-indicative measurement such as vibration/heat/etc. or even place sensors within the abrasive article (or polishing pad) itself. In this approach, the reinforcement learning algorithm is allowed to identify and leverage mappings between in-process observations and predicted performance directly.

### Computer Embodiment

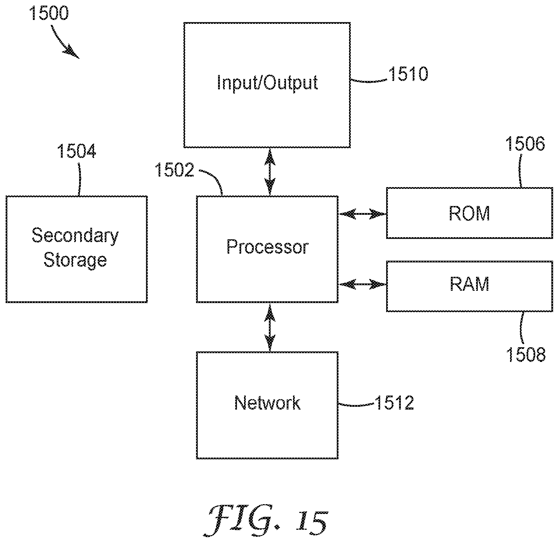

FIG. 15 illustrates a typical, general-purpose computer that may be programmed into a special purpose computer suitable for implementing one or more embodiments of the system disclosed herein. The robot controller module 102, ancillary control module 304, machine learning unit 308, and cloud computing system 306 described above may be implemented on special-purpose processing devices or on any general-purpose processing component, such as a computer with sufficient processing power, memory resources, and communications throughput capability to handle the necessary workload placed upon it. Such a general-purpose processing component 1500 includes a processor 1502 (which may be referred to as a central processor unit or CPU) that is in communication with memory devices including secondary storage 1504, read only memory (ROM) 1506, random access memory (RAM) 1508, input/output (I/O) devices 1510, and network connectivity devices 1512. The processor 1502 may be implemented as one or more CPU chips or may be part of one or more application specific integrated circuits (ASICs).

The secondary storage 1504 is typically comprised of one or more disk drives or tape drives and is used for non-volatile storage of data and as an over-flow data storage device if RAM 1508 is not large enough to hold all working data. Secondary storage 1504 may be used to store programs that are loaded into RAM 1508 when such programs are selected for execution. The ROM 1506 is used to store instructions and perhaps data that are read during program execution. ROM 1506 is a non-volatile memory device that typically has a small memory capacity relative to the larger memory capacity of secondary storage 1504. The RAM 1508 is used to store volatile data and perhaps to store instructions. Access to both ROM 1506 and RAM 1508 is typically faster than to secondary storage 1504.

The devices described herein can be configured to include computer-readable non-transitory media storing computer readable instructions and one or more processors coupled to the memory, and when executing the computer readable instructions configure the processing component 1500 to perform method steps and operations described above with reference to FIG. 1 to FIG. 6. The computer-readable non-transitory media includes all types of computer readable media, including magnetic storage media, optical storage media, flash media and solid-state storage media.

It should be further understood that software including one or more computer-executable instructions that facilitate processing and operations as described above with reference to any one or all of steps of the disclosure can be installed in and sold with one or more servers and/or one or more routers and/or one or more devices within consumer and/or producer domains consistent with the disclosure. Alternatively, the software can be obtained and loaded into one or more servers and/or one or more routers and/or one or more devices within consumer and/or producer domains consistent with the disclosure, including obtaining the software through physical medium or distribution system, including, for example, from a server owned by the software creator or from a server not owned but used by the software creator. The software can be stored on a server for distribution over the Internet, for example.

Also, it will be understood by one skilled in the art that this disclosure is not limited in its application to the details of construction and the arrangement of components set forth in the following description or illustrated in the drawings. The embodiments herein are capable of other embodiments, and capable of being practiced or carried out in various ways. Also, it will be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings. In addition, the terms "connected" and "coupled," and variations thereof, are not restricted to physical or mechanical connections or couplings. Further, terms such as up, down, bottom, and top are relative, and are employed to aid illustration, but are not limiting.

The components of the illustrative devices, systems and methods employed in accordance with the illustrated embodiments of the present invention can be implemented, at least in part, in digital electronic circuitry, analog electronic circuitry, or in computer hardware, firmware, software, or in combinations of them. These components can be implemented, for example, as a computer program product such as a computer program, program code or computer instructions tangibly embodied in an information carrier, or in a machine-readable storage device, for execution by, or to control the operation of, data processing apparatus such as a programmable processor, a computer, or multiple computers.

A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network. Also, functional programs, codes, and code segments for accomplishing the present invention can be easily construed as within the scope of the invention by programmers skilled in the art to which the present invention pertains. Method steps associated with the illustrative embodiments of the present invention can be performed by one or more programmable processors executing a computer program, code or instructions to perform functions (e.g., by operating on input data and/or generating an output). Method steps can also be performed by, and apparatus of the invention can be implemented as, special purpose logic circuitry, e.g., an FPGA (field programmable gate array) or an ASIC (application-specific integrated circuit), for example.

The various illustrative logical blocks, modules, and circuits described in connection with the embodiments disclosed herein may be implemented or performed with a general-purpose processor, a digital signal processor (DSP), an ASIC, a FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, *e.g.*, magnetic, magneto-optical disks, or optical disks. Information carriers suitable for embodying computer program instructions and data include all forms of non-volatile memory, including by way of example, semiconductor memory devices, *e.g.*, electrically programmable read-only memory or ROM (EPROM), electrically erasable programmable ROM (EEPROM), flash memory devices, and data storage disks (e.g., magnetic disks, internal hard disks, or removable disks, magneto-optical disks, and CD-ROM and DVD-ROM disks). The processor and the memory can be supplemented by or incorporated in special purpose logic circuitry.

Those of skill in the art understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill in the art further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. A software module may reside in random access memory (RAM), flash memory, ROM, EPROM, EEPROM, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. In other words, the processor and the storage medium may reside in an integrated circuit or be implemented as discrete components.

As used herein, "machine-readable medium" means a device able to store instructions and data temporarily or permanently and may include, but is not limited to, random-access memory (RAM), read-only memory (ROM), buffer memory, flash memory, optical media, magnetic media, cache memory, other types of storage (e.g., Erasable Programmable Read-Only Memory (EEPROM)), and/or any suitable combination thereof. The term "machine-readable medium" should be taken to include a single medium or multiple media (e.g., a centralized or distributed database, or associated caches and servers) able to store processor instructions. The term "machine-readable medium" shall also be taken to include any medium, or combination of multiple media, that is capable of storing instructions for execution by one or more processors, such that the instructions, when executed by one or more processors cause the one or more processors to perform any one or more of the methodologies described herein. Accordingly, a "machine-readable medium" refers to a single storage apparatus or device, as well as "cloud-based" storage systems or storage networks that include multiple storage apparatus or devices. To the extent such signals are transitory, the term "machine-readable medium" as used herein excludes signals *per se.*

The above-presented description and figures are intended by way of example only and are not intended to limit the illustrative embodiments in any way except as set forth in the appended claims. It is noted that various technical aspects of the various elements of the various exemplary embodiments that have been described above can be combined in numerous other ways, all of which are considered to be within the scope of the disclosure.

Accordingly, although exemplary embodiments have been disclosed for illustrative purposes, those skilled in the art will appreciate that various modifications, additions, and substitutions are possible. Therefore, the disclosure is not limited to the above-described embodiments but may be modified within the scope of appended claims.

## Claims

1. A computer-implemented method of providing robotic paint repair, comprising:
a) receiving, by one or more processors, coordinates of each identified defect in a substrate along with characteristics of each defect;
b) communicating, by the one or more processors, coordinates of an identified defect in the substrate to a robot controller module along with any additional data needed for the robot controller module to control a robot manipulator to bring an end effector of the robot manipulator into close proximity to the identified defect on the substrate;
c) providing, by the one or more processors, characteristics of the defect and a current state of at least the end effector of the robot manipulator to a local or cloud-based policy server;
d) receiving, by the one or more processors, a repair action from the policy server based on a previously learned control policy that is updated by a machine learning unit;
e) executing, by the one or more processors, the repair action by communicating instructions to the robot controller module and end effector to implement the repair action; e1) receiving by the one or more processors, characteristics of each defect including locally collected in-situ inspection data from end effector sensors;
f) providing, by the one or more processors, the *in-situ* data to a machine learning unit for creating learning updates using at least one of fringe pattern projection, deflectometry, and intensity measurements of diffuse reflected or normal white light using a camera;
g) the one or more processors receiving quality data relating to a quality of a repair resulting from the repair action and providing the characteristics of the defect and the quality data to the policy server for logging;
h) the one or more processors implementing a machine learning module that runs learning updates to improve future repair actions from the policy server based on a particular identified defect and subsequent evaluation of an executed repair.

2. The method of claim 1, wherein the repair action includes at least one of set points for RPM of a sanding tool, a control input for a compliant force flange, a trajectory of the robot manipulator, and total processing time.

3. The method of claim 2, wherein the trajectory of the robot manipulator is communicated by the one or more processors to the robot manipulator as time-varying positional offsets from an origin of the defect being repaired.

4. The method of claim 1, further comprising the one or more processors repeating steps c)-f) until the identified defect is satisfactorily repaired.

5. The method of claim 1, further comprising the one or more processors identifying a repair as good or bad using sensor feedback collected during and/or after execution of the repair action and implementing reinforcement learning to develop a repair action for an identified defect.

6. The method of claim 5, wherein the reinforcement learning is implemented by mapping raw imaging data of identified defects to repair actions, assigning rewards based on a quality of the repair action, and identifying a policy that maximizes the reward.

7. The method of claim 6, wherein the reinforcement learning is implemented as a reinforcement learning task based on a Markov Decision Process (MDP).

8. The method of claim 7, wherein the MDP is a finite MDP having tasks implemented in an MDP transition graph using at least the states of Initial, Sanded, Polished, and Completed, wherein the Initial state is augmented to include the identified defect in its original, unaltered state, the Sanded state and the Polished state occur after sanding and polishing actions, respectively, and the Completed state marks an end of the repair process.

9. The method of claim 8, wherein the Sanded state and Polished state includes locally collected *in-situ* inspection data from end effector sensors.

10. The method of claim 8, wherein the tasks implemented in the MDP transition graph includes actions comprising at least one of complete, tendDisc, sand, and polish, wherein the complete action takes a process immediately to the Completed state, tendDisc action signals the robot manipulator to wet, clean, or replace an abrasive disc for the end effector, and the sand action and the polish action are implemented using parameters including at least one of RPM of a sanding tool of the end effector, applied pressure, dwell/process time, and repair trajectory for the robot manipulator.

11. The method of claim 10, wherein the sand action and the polish action are continuous parametric functions for continuous parameters.

12. The method of claim 10, wherein the tasks implemented in the MDP transition graph include a single tendDisc action followed by a single sanding action followed by a single polishing action.

13. The method of claim 1, wherein the characteristics of the defect comprise unprocessed, raw images.

14. The method of claim 1, wherein the learned control policy uses abrasive utilization data to enable decisions based on remaining abrasive life.

15. The method of claim 1, further comprising finding the learned control policy using physically simulated defects.

## Patentansprüche

1. Ein computerimplementiertes Verfahren zum Bereitstellen einer robotischen Lackreparatur, aufweisend:
a) Empfangen, durch einen oder mehrere Prozessoren, von Koordinaten jedes identifizierten Defekts in einem Substrat zusammen mit Eigenschaften jedes Defekts;
b) Kommunizieren, durch den einen oder die mehreren Prozessoren, von Koordinaten eines identifizierten Defekts in dem Substrat an ein Robotersteuermodul zusammen mit jeglichen zusätzlichen Daten, die für das Robotersteuermodul benötigt werden, um einen Robotermanipulator zu steuern, um einen Endeffektor des Robotermanipulators in die Nähe des identifizierten Defekts auf dem Substrat zu bringen;
c) Bereitstellen, durch den einen oder die mehreren Prozessoren, von Eigenschaften des Defekts und eines aktuellen Zustands mindestens des Endeffektors des Robotermanipulators an einen lokalen oder Cloud-basierten Richtlinienserver;
d) Empfangen, durch den einen oder die mehreren Prozessoren, einer Reparaturmaßnahme von dem Richtlinienserver basierend auf einer zuvor gelernten Steuerrichtlinie, die durch eine Maschinenlerneinheit aktualisiert wird;
e) Ausführen, durch den einen oder die mehreren Prozessoren, der Reparaturmaßnahme durch Kommunizieren von Anweisungen an das Robotersteuermodul und den Endeffektor, um die Reparaturmaßnahme zu implementieren;
e1) Empfangen, durch den einen oder die mehreren Prozessoren, von Eigenschaften jedes Defekts, einschließlich lokal gesammelter In-situ-Inspektionsdaten von Endeffektorsensoren;
f) Bereitstellen, durch den einen oder die mehreren Prozessoren, der *In-situ*-Daten an eine Maschinenlerneinheit zum Erstellen von Lernaktualisierungen unter Verwendung von mindestens einem von Streifenmusterprojektion, Deflektometrie und Intensitätsmessungen von diffus reflektiertem oder normalem weißen Licht unter Verwendung einer Kamera;
g) der eine oder die mehreren Prozessoren empfangen Qualitätsdaten, die sich auf die Qualität einer Reparatur beziehen, die aus der Reparaturmaßnahme resultiert, und liefern die Eigenschaften des Defekts und die Qualitätsdaten an den Richtlinienserver zur Protokollierung;
h) der eine oder die mehreren Prozessoren implementieren ein Modul für maschinelles Lernen, das Lernaktualisierungen ausführt, um künftige Reparaturmaßnahmen vom Richtlinienserver basierend auf einem bestimmten identifizierten Defekt und der anschließenden Bewertung einer ausgeführten Reparatur zu verbessern.

2. Das Verfahren nach Anspruch 1, wobei die Reparaturmaßnahme mindestens eines von Sollpunkten für die Drehzahl eines Schleifwerkzeugs, einer Steuereingabe für einen nachgiebigen Kraftflansch, einer Trajektorie des Robotermanipulators und einer Gesamtverarbeitungszeit einschließt.

3. Das Verfahren nach Anspruch 2, wobei die Trajektorie des Robotermanipulators durch den einen oder die mehreren Prozessoren an den Robotermanipulator als zeitveränderliche Positionsabweichungen von einem Ursprung des zu reparierenden Defekts übermittelt wird.

4. Das Verfahren nach Anspruch 1, ferner aufweisend ein Wiederholen, durch den einen oder die mehreren Prozessoren, der Schritte c)-f), bis der identifizierte Defekt zufriedenstellend repariert ist.

5. Das Verfahren nach Anspruch 1, ferner aufweisend ein Identifizieren, durch den einen oder die mehreren Prozessoren, einer Reparatur als gut oder schlecht unter Verwendung von Sensorrückmeldung, die während und/oder nach der Ausführung der Reparaturmaßnahme gesammelt werden, und ein Implementieren von Verstärkungslernen, um eine Reparaturmaßnahme für einen identifizierten Defekt zu entwickeln.

6. Das Verfahren nach Anspruch 5, wobei das Verstärkungslemen durch Zuordnen von Rohbilddaten identifizierter Defekte zu Reparaturmaßnahmen, Zuweisen von Belohnungen basierend auf einer Qualität der Reparaturmaßnahme und Identifizieren einer Strategie, die die Belohnung maximiert, implementiert wird.

7. Das Verfahren nach Anspruch 6, wobei das Verstärkungslernen als eine Verstärkungslernaufgabe basierend auf einem Markov-Entscheidungsprozess (MDP) implementiert ist.

8. Das Verfahren nach Anspruch 7, wobei der MDP ein endlicher MDP mit Aufgaben ist, die in einem MDP-Übergangsgraphen implementiert sind, der mindestens die Zustände "initial", "geschliffen", "poliert" und "abgeschlossen" verwendet, wobei der Zustand "initial" erweitert wird, um den identifizierten Defekt in seinem ursprünglichen, unveränderten Zustand einzuschließen, der Zustand "geschliffen" und der Zustand "poliert" nach Schleif- bzw. Poliermaßnahmen auftreten und der Zustand "abgeschlossen" ein Ende des Reparaturprozesses markiert.

9. Das Verfahren nach Anspruch 8, wobei der Zustand "geschliffen" und der Zustand "poliert" lokal gesammelte *In-situ-*Inspektionsdaten von Endeffektorsensoren einschließen.

10. Das Verfahren nach Anspruch 8, wobei die in dem MDP-Übergangsgraphen implementierten Aufgaben Maßnahmen einschließen, die mindestens eines der Folgenden aufweisen: Vervollständigen, tendDisc, Schleifen und Polieren, wobei die Vervollständigungsmaßnahme einen Prozess unmittelbar in den Zustand "abgeschlossen" bringt, die tendDisc-Maßnahme dem Robotermanipulator signalisiert, eine Schleifscheibe für den Endeffektor zu befeuchten, zu reinigen oder auszutauschen, und die Schleifmaßnahme und die Poliermaßnahme unter Verwendung von Parametern implementiert werden, die mindestens eine der Folgenden einschließen: Drehzahl eines Schleifwerkzeugs des Endeffektors, angewandter Druck, Verweil-/Verfahrenszeit und Reparaturtrajektorie für den Robotermanipulator.

11. Das Verfahren nach Anspruch 10, wobei die Schleifmaßnahme und die Poliermaßnahme kontinuierliche parametrische Funktionen für kontinuierliche Parameter sind.

12. Das Verfahren nach Anspruch 10, wobei die in dem MDP-Übergangsgraphen implementierten Aufgaben eine einzelne tendDisc-Maßnahme gefolgt von einer einzelnen Schleifmaßnahme gefolgt von einer einzelnen Poliermaßnahme einschließen.

13. Das Verfahren nach Anspruch 1, wobei die Eigenschaften des Defekts unbearbeitete Rohbilder aufweisen.

14. Das Verfahren nach Anspruch 1, wobei die gelernte Steuerrichtlinie Schleifmittelnutzungsdaten verwendet, um Entscheidungen basierend auf einer verbleibenden Schleifmittellebensdauer zu ermöglichen.

15. Das Verfahren nach Anspruch 1, ferner aufweisend das Finden der gelernten Steuerrichtlinie unter Verwendung von physisch simulierten Defekten.

## Revendications

1. Procédé mis en oeuvre par ordinateur permettant de fournir une réparation de peinture robotique, comprenant :
a) la réception, par un ou plusieurs processeurs, de coordonnées de chaque défaut identifié dans un substrat conjointement avec des caractéristiques de chaque défaut ;
b) la communication, par le ou les processeurs, de coordonnées d'un défaut identifié dans le substrat à un module de dispositif de commande de robot conjointement avec des quelconques données supplémentaires nécessaires au module de dispositif de commande de robot pour commander un manipulateur de robot pour amener un effecteur terminal du manipulateur de robot à proximité immédiate du défaut identifié sur le substrat ;
c) la fourniture, par le ou les processeurs, de caractéristiques du défaut et un état actuel d'au moins l'effecteur terminal du manipulateur de robot à un serveur de politique local ou en nuage ;
d) la réception, par le ou les processeurs, d'une action de réparation en provenance du serveur de politique sur la base d'une politique de commande préalablement apprise qui est mise à jour par une unité d'apprentissage automatique ;
e) l'exécution, par le ou les processeurs, de l'action de réparation en communiquant des instructions au module de dispositif de commande de robot et à l'effecteur terminal pour mettre en oeuvre l'action de réparation ;
e1) le réception, par le ou les processeurs, de caractéristiques de chaque défaut comportant des données d'inspection in situ collectées localement en provenance de capteurs d'effecteur terminal ;
f) la fourniture, par le ou les processeurs, des données *in situ* à une unité d'apprentissage automatique pour créer des mises à jour d'apprentissage à l'aide d'au moins l'une parmi une projection de diagramme de franges, une déflectométrie et des mesures d'intensité de lumière blanche normale ou réfléchie de manière diffuse à l'aide d'une caméra ;
g) le ou les processeurs recevant des données de qualité relatives à une qualité d'une réparation résultant de l'action de réparation et fournissant les caractéristiques du défaut et des données de qualité au serveur de politique pour l'enregistrement ;
h) le ou les processeurs mettant en oeuvre un module d'apprentissage automatique qui exécute des mises à jour d'apprentissage pour améliorer des actions de réparation futures à partir du serveur de politique sur la base d'un défaut identifié particulier et de l'évaluation ultérieure d'une réparation exécutée.

2. Procédé selon la revendication 1, dans lequel l'action de réparation comporte au moins l'un parmi des points de consigne pour des tr/min d'un outil de ponçage, une entrée de commande pour une bride de force souple, une trajectoire du manipulateur de robot et un temps de traitement total.

3. Procédé selon la revendication 2, dans lequel la trajectoire du manipulateur de robot est communiquée par le ou les processeurs au manipulateur de robot en tant que décalages de position variant dans le temps à partir d'une origine du défaut qui est réparé.

4. Procédé selon la revendication 1, comprenant en outre le ou les processeurs répétant les étapes c) à f) jusqu'à ce que le défaut identifié soit réparé de manière satisfaisante.

5. Procédé selon la revendication 1, comprenant en outre le ou les processeurs identifiant une réparation en tant que bonne ou mauvaise à l'aide d'une rétroaction de capteur collectée pendant et/ou après exécution de l'action de réparation et mettant en oeuvre un apprentissage par renforcement pour développer une action de réparation pour un défaut identifié.

6. Procédé selon la revendication 5, dans lequel l'apprentissage par renforcement est mis en oeuvre en mappant des données d'imagerie brute de défauts identifiés sur des actions de réparation, en attribuant des récompenses basées sur une qualité de l'action de réparation, et en identifiant une politique qui maximise la récompense.

7. Procédé selon la revendication 6, dans lequel l'apprentissage par renforcement est mis en oeuvre en tant que tâche d'apprentissage par renforcement basée sur un processus de décision markovien (MDP).

8. Procédé selon la revendication 7, dans lequel le MDP est un MDP fini ayant des tâches mises en oeuvre dans un graphe de transition MDP à l'aide d'au moins les états Initial, Poncé, Poli et Achevé, dans lequel l'état Initial est augmenté pour inclure le défaut identifié dans son état d'origine, non modifié, l'état Poncé et l'état Poli se produisent après des actions de ponçage et de polissage, respectivement, et l'état Achevé marque une fin du processus de réparation.

9. Procédé selon la revendication 8, dans lequel l'état Poncé et l'état Poli comportent des données d'inspection *in situ* collectées localement à partir de capteurs d'effecteur terminal.

10. Procédé selon la revendication 8, dans lequel les tâches mises en oeuvre dans le graphe de transition MDP comportent des actions comprenant au moins l'un parmi les actions achevé, tendDisc, poncer et polir, dans lequel l'action achevé fait passer un processus immédiatement à l'état Achevé, l'action tendDisc signale au manipulateur de robot de mouiller, nettoyer, ou remplacer un disque abrasif pour l'effecteur terminal, et l'action poncer et l'action polir sont mises en oeuvre à l'aide de paramètres comportant au moins l'un parmi le tr/min d'un outil de ponçage de l'effecteur terminal, la pression appliquée, le temps de maintien/traitement, et la trajectoire de réparation pour le manipulateur du robot.

11. Procédé selon la revendication 10, dans lequel l'action poncer et l'action polir sont des fonctions paramétriques continues pour des paramètres continus.

12. Procédé selon la revendication 10, dans lequel les tâches mises en oeuvre dans le graphe de transition MDP comportent une action à tendDisc unique suivie d'une action de ponçage unique suivie d'une action de polissage unique.

13. Procédé selon la revendication 1, dans lequel les caractéristiques du défaut comprennent des images brutes, non traitées.

14. Procédé selon la revendication 1, dans lequel la politique de commande apprise utilise des données d'utilisation abrasives pour permettre des décisions basées sur la durée de vie abrasive restante.

15. Procédé selon la revendication 1, comprenant en outre la recherche de la politique de commande apprise à l'aide de défauts physiquement simulés.
